# EUROPEAN PATENT SPECIFICATION

(11) **EP 0 603 981 B1**
(45) Date of publication and mention of the grant of the patent: **09.10.1996**
(21) Application number: 93203642.9
(22) Date of filing: 22.12.1993
(51) Int. Cl.: A23L 1/24, A23D 7/02, A23L 1/19

(54) **Method for preparing an emulsion of adjustable viscosity; the emulsion thus prepared and foodstuff obtained using such emulsion**
Verfahren zur Herstellung einer Emulsion mit regulierbarer Viskosität; die so hergestellte Emulsion und durch Anwendung dieser Emulsion gewonnene Nahrungsmittel
Procédé de préparation d'une émulsion dont la viscosité est ajustable; l'émulsion ainsi préparée et aliment obtenu en utilisant cette émulsion

(30) Priority: 23.12.1992 NL 9202245
(43) Date of publication of application: 29.06.1994
(73) Proprietor: Verenigde Coöperatieve Melkindustrie Coberco B.A., NL-7201 NM Zutphen (NL)
(72) Inventor: Klarenbeek, Gijsbert, NL-7421 AX Deventer (NL); Heuvelman, Lambertus, NL-7462 DR Rijssen (NL); van den Boogaard, Cornelis, NL-7213 BW Gorssel (NL)
(74) Representative: Smulders, Theodorus A.H.J., Ir.

(56) References cited:
- EP-A- 0 052 899
- EP-A- 0 076 549
- EP-A- 0 129 346
- EP-A- 0 195 365
- EP-A- 0 485 663
- GB-A- 2 063 273
- GB-A- 2 229 077
- US-A- 3 892 873

## Description

This invention relates to the preparation of a heat-stable oil-in-water emulsion of adjustable viscosity. The invention relates in particular to the preparation of slightly sour food products having a viscous character.

In the preparation of liquid foodstuffs, the structure or consistency is an important parameter in connection with the organoleptic sensation.

Besides the taste, this consistency, typically also referred to as viscosity and/or firmness, determines the perception of a foodstuff to a considerable extent.

The structure is mainly determined by the interaction between the different constituents and in particular that with water. The extent to which the water present can be bound is determinative of the height of the viscosity.

In general, to obtain a desired structure, a thickening or gelling agent is added to the aqueous foodstuff. Examples of such thickening agents which, even in a minor concentration, are capable of binding much water and hence of structuring an aqueous foodstuff, are polysaccharides such as gums, starches and carrageenans. Accordingly, in the preparation of sour products such as dressings, it is in particular starch and gums that are used as thickening agents.

However, these polysaccharides lack the ability to stabilize a dispersion of fat or oil in water, i.e., they are not emulsifiers.

In contrast with these polysaccharides, protein, such as egg albumin, has both gelling and emulsifying properties. Because chicken protein is relatively expensive and has good functional properties only in fresh condition, other, cheaper protein sources were looked for.

This investigation was focused in particular on the applicability of whey proteins both as emulsifier and as thickener, the attention being directed in particular to the replacement of egg yolk as emulsifier in the preparation of mayonnaise-like products.

U.S. Patent No. 3,892,873, for example, discloses the preparation of dressings and mayonnaise with an oil content of at least 40%, wherein partly thermally denatured whey proteins are used as emulsifier and thickener. The thermal denaturation of the whey proteins involves at least 70% denaturation. Because the emulsifying properties of denatured protein are less good, products thus prepared have the drawback of a less good stability, in particular the emulsion stability.

Dutch patent specification 181,326 discloses the application of thermally modified and desalted whey proteins as emulsifier and structure former in a yoghurt-like dressing. Because the whey proteins were heated at slightly increased pH, they were indeed denatured, but remained soluble. This method, too, leads to a product of less good stability.

European patent specification 52 899 discloses a method for preparing a spread of low fat content in the form of a water-in-oil emulsion. Here, in addition to whey proteins, thickeners are used as well.

A more recent application of whey proteins as emulsifier in the preparation of oil-in-water emulsions is described in U.S. Patent No. 4,720,390, which relates to the preparation of a gelled product which can be used as ingredient for pancakes and desserts. According to the method described, an emulsion of a protein content in the range of 4-12 wt.% and an oil content in the range of 2-40 wt.%, wherein the average dimensions of the fat particles are between 0.1 and 6 µm, are batchwise heated at a pH between 3.5 and 8.

A major limitation of this method is that it is only applicable to end products, so that a flowing, continuous process operation cannot be employed in the preparation. The reason for this is that under the influence of relatively high shearing forces the structure obtained is irreversibly damaged, so that it is impossible to mix other constituents into the product once it has been structured.

The object of the present method is to provide a method by the use of which in a continuous process operation, stable and heat-resistent emulsions are obtained, which at a slightly acidic pH value yield structures whose viscosity is adjustable within certain limits.

According to the invention, a heat-stable emulsion of adjustable viscosity is obtained by carrying out the following process steps.

As starting product, an oil-in-water emulsion is prepared having an oil content in the range of 10-25 wt.% based on the total emulsion and a whey protein content in the range of 3-7 wt.% likewise based on the total emulsion. The preparation of this emulsion includes homogenization such that at least 85% of the fat particles present possess an average diameter less than 1.2 µm, as determined with a Malvern PSA 2600. For this purpose, preferably a homogenization pressure higher than 25 MPa is used.

Then the pH of this emulsion is adjusted to a value higher than 6.5 and preferably to a value between 6.5 and 8.0, whereafter the emulsion is heated while flowing (this treatment is also referred to hereinafter as 'flow-heating') at this pH for a period of 0.5-5 minutes at a temperature of 75-140°C. Preferably used for this purpose is a heating system with a high heating rate in the range above 75°C and in particular a direct heating system (DSI). This heating leads to a denaturation of the whey proteins but not to heat instability and hence not to flocculation, for instance.

Then the emulsion "activated" by the preceding treatments is cooled to a temperature below 20°C, preferably below 10°C, whereafter, with stirring, the pH thereof is adjusted to a value between 4 and 5, so that in the final product a permanent structure is obtained. For adjusting this pH value, any known nutrient acid, such as for instance lactic acid, can be employed.

If, for instance, a WPC of an ash/protein ratio between 0.10 and 0.20 (WPC-50 and WPC-35, respectively) is used for preparing an emulsion comprising a maximum of 20% fat, while, for obtaining optimum heat stability a maximum protein content of 5% is used, the structure can be provided in a suitable manner by adjusting the pH of the emulsion to a value between 4 and 4.5 by adding a solution of a nutrient acid to the emulsion under stirring conditions.

If a WPC of an ash/protein ratio between 0.03 and 0.10 is used, an emulsion of a higher whey protein content, for instance up to 7%, can be prepared without any objection. In the case of such an emulsion, after the heating step the structure can be provided in a suitable manner by aseptically dosing a NaCl solution to the "activated" emulsion until an ash/protein ratio of 0.20 or higher is attained, and thereafter or simultaneously the pH is adjusted to a value between 4 and 5.

If desired, the dosing of the acid can be performed aseptically by in-line injection and mixture.

By virtue of the structure formed in the product obtained, it acquires a high-viscous to paste-like consistency, which, depending on the protein/fat ratio, the pH and the ash content of the protein, is adjustable within certain limits, as will be demonstrated in the examples hereinafter. The structure formed has a thixotropic character; it loses apparent viscosity with stirring (shear) and the viscosity decreases more strongly with increasing shear. The viscosity lost is restored after the shear is removed. In spite of the shear, the product obtained retains a homogeneous and smooth character; no visible syneresis occurs. For this reason, the product obtained can be mixed with other constituents, such as aromatic substances, vegetable and fruit constituents, etc., without loss of the smooth, homogeneous structure.

By virtue of its continuous character, the method according to the invention is so flexible that it is possible to prepare not only end products such as foodstuffs, but also semimanufactured products, such as base materials for the preparation of pharmaceuticals, for instance ointments, etc.

Surprisingly, it has been found that the heat stability of the whey proteins in the emulsion prepared by the method according to the invention is such that this emulsion, even at relatively high protein contents, can be heated to temperatures above 75°C without the system becoming macroscopically unstable. Partly as a consequence of this, it is possible to obtain the emulsion in powder form, for instance by spray-drying.

For the purpose of processing the heated emulsion into an emulsion powder which after reconstitution has a desired viscosity, a dry acidifying agent is generally added to the powder. Thus, when, for instance, the starting material is a whey protein concentrate which has an ash to protein ratio of between 0.10 and 0.20 and has been heated at a pH between 7 and 7.5 and subsequently been spray-dried, an acidifying agent in the form of glucono-δ-lactone or citric acid can be added, so that after reconstitution the pH of the product will be between 4.2 and 4.5.

The whey proteins used in the method according to the invention may have been prepared by a method that is known per se.

According to a suitable method of preparation, they are obtained by ultrafiltration of cheese whey, for instance. This ultrafiltration leads to a particular ratio of the protein content to the solid content and hence to a particular ratio of whey protein to ash. It is customary to characterize whey protein concentrates (WPC) thus obtained on the basis of the whey protein content, so that WPC-80, for instance, is a whey protein concentrate comprising 80% (undenatured) whey proteins.

The whey proteins can also be obtained, for instance, by desugaring cheese whey, optionally in combination with desalting through electrodialysis or ion exchange, until a protein content, based on the solids, of preferably at least 35% is achieved.

In the emulsion according to the invention, it is possible to use any fat or any oil, both vegetable and animal and mixtures thereof, as are known for the preparation of foodstuff emulsions, such as spreads and sauces.

The invention will now be further explained in and by the following experiments and examples.

### Experiment 1

To determine the heat stability of the emulsion according to the invention, the following experiment was carried out.

A dispersion of 3.5% whey proteins (A), prepared from a WPC-80 having an ash/protein ratio of 0.03, was adjusted to a pH value of 7.5 using a sodium hydroxide solution.

A similar type of whey protein concentrate, though with a protein concentration of 5.5% (B), was emulsified with 15% butter oil through homogenization at 30 MPa. The pH of this oil-in-water emulsion was likewise adjusted to a value of 7.5.

Under heating of a tubular heat exchanger, both preparations were heated at 85°C for 5 minutes. Dispersion (A) appeared to be heat-unstable and this dispersion left the heater in highly flocculated condition. Emulsion (B), on the other hand, of which 4.4% whey protein is not present in the oil/water interface, appeared to be heat-stable and this emulsion left the heater as a homogeneous thin fluid.

### Experiment 2

This experiment was an investigation of the influence of the pH upon heating on the heat-stability on the one hand and on the extent of viscosity of an oil-in-water emulsion on the other.

A dispersion of whey proteins with 6.5% protein was homogenized at 300 bar with 15% butter oil, such that 5.5% whey protein was present in the emulsion, and portions of this emulsion were adjusted to different pH values. These portions were subsequently flow-heated on a laboratory heater for 5 minutes at 85°C.

After the non-flocculated emulsion had cooled to a temperature of 10°C, the pH thereof was adjusted to a value of 4.3 using lactic acid under stirring conditions. The structures formed were assessed for viscosity. This viscosity was measured with a rotary viscometer at a shearing rate of 227 s⁻¹. The results of these measurements are summarized in Table 1 below.

**Table 1**

| **Heating pH** | **Heat-stability at heating pH** | **Viscosity (mPa.s) at pH 4.3** |
|---|---|---|
| 3.5 | yes | 10 |
| 4.0 | no | n.m. |
| 4.5 | no | n.m. |
| 6.5 | no | n.m |
| 7.0 | yes | 60 |
| 7.5 | yes | 80 |

### Experiment 3

This experiment was an investigation of the influence of the salt content, expressed as the ash/protein ratio, on the heat stability and on the extent of structure formation at acid pH.

A 4.1% protein dispersion was prepared from whey protein products of different ash/protein ratios and it was homogenized with 15% butter oil at 25 MPa until such a distribution of the size of the fat globules in the emulsion was obtained that at least 85% of these particles possessed an average diameter smaller than 1.2 µm. The pH of these emulsions was adjusted to a value of 7.5 and the emulsions were subsequently flow-heated, as was indicated in Experiment 2.

After the preparations had cooled off and been acidified with lactic acid to a pH of 4.3, the viscosity was measured at 10°C and a shearing rate of 129 s⁻¹. The results are summarized in Table 2 below.

**Table 2**

| **Type of WPC** | **Ash/protein** | **Viscosity (mPa.s)** | |
|---|---|---|---|
| | | **after heating** | **after acidification** |
| WPC-80 | 0.03 | 6 | 25 |
| WPC-60 | 0.07 | 8 | 400 |
| WPC-80+permeate | 0.10 | 18 | 600 |
| WPC-35 | 0.19 | 177 | 2000 |
| WPC-80+NaCl^{**1**}⁾ | 0.20 | 6 | 120^{**3**}⁾ |
| WPC-80+NaCl^{**2**}⁾ | 0.20 | 8 | 200^{**3**}⁾ |

| | | | |
|---|---|---|---|
| ^{**1**}⁾ NaCl added after heating of the emulsion | | | |
| ^{**2**}⁾ NaCl added prior to heating | | | |
| ^{**3**}⁾ This viscosity was determined at a shearing rate of 229 s⁻¹ | | | |

### Experiment 4

This experiment was an investigation of the influence of the fat content, given a constant protein content, on the viscosity.

A number of whey protein dispersions, having an ash/protein ratio of 0.20 and prepared using a WPC-35, were homogenized with a varying butter oil content at 25 MPa until in all cases a protein content of 3% was obtained in the emulsion.

The pH of the emulsions was adjusted to a value of 7.5 and the emulsions were flow-heated for 5 minutes at 90°C using a tubular heat exchanger.

After cooling, the pH of the emulsions was slowly adjusted to a value of 4.5 using 10 g glucono-δ-lactone per kilogram product.

Using a rotary viscometer, the viscosity was measured at a shearing rate of 23 s⁻¹ and 10°C, after the pH had acquired a value of 4.5.

The measured viscosities, in conjunction with the fat content, are summarized in Table 3 below.

**Table 3**

| **Fat content** | **Viscosity (mPa.s)** |
|---|---|
| 10 | 960 |
| 12 | 1200 |
| 15 | 1750 |
| 17 | 2300 |

### Example 1

This example describes the preparation of a pasty slightly acid product using a continuous process operation.

Using a WPC-50 whey protein concentrate having an ash/protein ratio of 0.10, two oil-in-water emulsions were prepared, respectively containing 18 and 20% milk fat.

The emulsions respectively contained 5.5 and 4.5% protein and they were homogenized in two steps at 55°C at pressures of 25 and 4 MPa, respectively.

By means of lye injections, the pH of the emulsions was adjusted to a value of 7.5 and using the direct UHT system (Sterilab Alfa Laval) the emulsions were heated to 130°C, followed by prolonged heating for 30 seconds.

After the emulsions had cooled to 5°C through a flash cooling and heat exchanger, they were subjected to in-line acidification with a 25% solution of lactic acid until the pH had attained a value of 4.3.

For the purpose of the acidification, the acid was injected by means of a displacement pump and subsequently the acid was mixed with a high-speed mixer arranged in line.

The pasty products obtained were aseptically charged to small containers. Prior and subsequent to heating, the emulsions were analyzed for fat globule size distribution (dᵥₛ) and after acidification they were analyzed for the extent of structure formation by measuring the firmness, determined using LFRA Stevens texture meter (cone ⌀ = 20 mm) (penetration depth = 20 mm).

**Table 4**

| **Product** | **D**_{**vs**}**(µm)** | **Firmness at 10°C (g)** |
|---|---|---|
| Emulsion 18% fat | < 1.2 | ≦ 10 |
| Emulsion 20% fat | < 1.27 | ≦ 10 |
| After heating 18% fat | 1.9 | ≦ 10 |
| After heating 20% fat | 2.2 | ≦ 10 |
| After acidification 18% fat | n.m. | 300 |
| After acidification 20% fat | n.m. | 400 |

### Example 2

In this Example the pulverization of an activated whey protein emulsion is described.

Using a two-stage homogenization at pressures of 250 and 40 bar, respectively, and 55°C, an emulsion containing 20% milk fat was prepared. The emulsion was prepared using a WPC-60 whey protein concentrate having an ash/protein ratio of 0.07. The protein content of the emulsion was adjusted to 4%.

With vigorous stirring, the pH of a portion of the heated emulsion was adjusted to a value of 6, whereafter 15% maltodextrin was dissolved (powder B). This mixture as well as another portion of the emulsion of a pH of 7.2 (powder A) were subsequently dried via a two-stage dryer with a nozzle atomizer.

The air inlet and outlet temperatures were set at 80°C and 180°C, respectively. The temperature range of the fluid bed was 60, 40 and 20°C.

The two emulsion powders were subsequently characterized on the basis of reconstitution and structure forming properties at a pH of 4.3, and further the two powders were compared with the non-dried product. The results are summarized in the following table.

**Table 5**

| **Variant** | **Solubility** | **Structuring ability** |
|---|---|---|
| powder A | poor^{**1**)} | moderate to poor |
| powder B | good**2**⁾ | good |
| liquid | good | good |
| powder A + 0.5 DTT^{**3**)} | good | good |

| | | |
|---|---|---|
| ^{**1**)} The agglomerates of fat globules with whey proteins do not dissolve in water. | | |
| ^{**2**)} After dissolution the fat globules appear to be finely distributed; a few small agglomerates. | | |
| ^{**3**)} By drying the activated emulsion at an increased pH the fat globules covered by whey proteins agglomerate by way of sulfur bridges. Di-thiothreitol (DTT) is a reducing agent which specifically breaks these disulfide compounds. | | |

## Claims

1. A method for preparing an oil-in-water emulsion, characterized in that a heat-stable emulsion of adjustable viscosity is obtained by
a) preparing an oil-in-water emulsion having an oil content of from 10 to 25 wt.% based on the total emulsion and a whey protein content of from 3 to 7 wt.% based on the total emulsion, the preparation of said emulsion including homogenization such that at least 85% of the fat particles present possess an average diameter smaller than 1.2 µm, whereafter
b) the pH of this emulsion is adjusted to a value higher than 6.5 and subsequently
c) the emulsion is flow-heated at this pH for a period of 0.5-5 minutes at a temperature of 75-140°C, whereafter
d) the emulsion is cooled to a temperature lower than 20°C, whereafter, with stirring, the pH of the emulsion is adjusted to a value between 4 and 5, so that in the final product a permanent structure is obtained.

2. A method according to claim 1c, characterized in that the product obtained is subsequently dried.

3. A method according to claim 1, characterized in that the pH mentioned in step b) of said claim is adjusted to a value between 6.5 and 8.0.

4. A method according to claim 1, characterized in that the heating step described in step c) of said claim is carried out in such a manner that the temperature of 75°C-140°C is attained as fast as possible.

5. A method according to claim 4, characterized in that for the purpose of heating a direct heating system (DSI) is used.

6. A method according to claim 1, characterized in that step d) comprises cooling to a temperature lower than 10°C.

7. An emulsion obtainable by the use the method according to one or more of claims 1-6.

8. A foodstuff containing the emulsion according to claim 7.

## Patentansprüche

1. Verfahren zur Herstellung einer Öl-in-Wasser-Emulsion, dadurch gekennzeichnet, daß eine hitzebeständige Emulsion mit einstellbarer Viskosität dadurch erhalten wird, daß
a) eine Öl-in-Wasser-Emulsion mit einem Ölgehalt von 10 bis 25 Gew.%, bezogen auf die gesamte Emulsion, und mit einem Molkeneiweißgehalt von 3 bis 7 Gew.%, bezogen auf die gesamte Emulsion, hergestellt wird, wobei derart homogenisiert wird, daß mindestens 85% der vorhandenen Fetteilchen einen durchschnittlichen Durchmesser unterhalb 1,2 µm besitzt, worauf
b) das pH dieser Emulsion auf einen Wert oberhalb 6,5 eingestellt wird und danach
c) die Emulsion bei diesem pH während einer Periode von 0,5 bis 5 Minuten bei einer Temperatur von 75 bis 140°C strömend erhitzt wird, worauf
d) die Emulsion auf eine Temperatur unterhalb 20°C abgekühlt wird, worauf unter Rühren das pH der Emulsion auf einen Wert zwischen 4 und 5 eingestellt wird, wodurch im Endprodukt eine bleibende Struktur erhalten wird.

2. Verfahren nach Anspruch 1c, dadurch gekennzeichnet, daß das erhaltene Produkt danach getrocknet wird.

3. Verfahren nach Anspruch 1, dadurch gekennzeichnet, daß das im Schritt b) dieses Anspruchs genannte pH auf einen Wert zwischen 6,5 and 8,0 eingestellt wird.

4. Verfahren nach Anspruch 1, dadurch gekennzeichnet, daß das im Schritt c) dieses Anspruchs beschriebene Erhitzen derart durchgeführt wird, daß die Temperatur von 75 bis 140°C so schnell wie möglich erreicht wird.

5. Verfahren nach Anspruch 4, dadurch gekennzeichnet, daß zum Erhitzen ein direktes Erhitzungssystem (DSI) verwendet wird.

6. Verfahren nach Anspruch 1, dadurch gekennzeichnet, daß im Schritt d) auf eine Temperatur unterhalb 10°C abgekühlt wird.

7. Emulsion, die durch Anwendung des Verfahrens nach einem oder mehreren der Ansprüche 1 bis 6 erhalten werden kann.

8. Nahrungsmittel, das die Emulsion nach Anspruch 7 enthält.

## Revendications

1. Un procédé de préparation d'une émulsion d'huile dans de l'eau, caractérisé en ce qu'une émulsion stable à la chaleur et de viscosité ajustable est obtenue en
a) préparant une émulsion d'huile dans de l'eau ayant un contenu en huile de 10 à 25 % en poids par rapport à l'émulsion totale, et un contenu de protéine de petit lait de 3 à 7 % en poids par rapport à l'émulsion totale, la préparation de ladite émulsion incluant une homogénéisation de manière à ce qu'au moins 85 % des particules de graisse possèdent un diamètre moyen inférieur à 1.2 µm, après quoi
b) le pH de cette émulsion est ajusté à une valeur supérieure à 6.5, et ensuite
c) l'émulsion est chauffée par un écoulement, à ce pH pendant une période de 0.5 - 5 minutes à une température de 75-140°C, après quoi
d) l'émulsion est refroidie à une température inférieure à 20°C, après quoi, sous agitation, le pH de l'émulsion est ajusté à une valeur située entre 4 et 5, de manière à ce qu'une structure permanente soit obtenue dans le produit final.

2. Un procédé selon la revendication 1c, caractérisé en ce que le produit obtenu est ensuite séché.

3. Un procédé selon la revendication 1, caractérisé en ce que le pH mentionné à l'étape b) de ladite revendication est ajusté à une valeur située entre 6.5 et 8.0.

4. Un procédé selon la revendication 1, caractérisé en ce que l'étape de chauffe décrite à l'étape c) de ladite revendication est effectuée de manière à ce que la température de 75°C-140°C soit atteinte aussi rapidement que possible.

5. Un procédé selon la revendication 4, caractérisé en ce que dans le but de chauffer, on utilise un système de chauffage direct (DSI).

6. Un procédé selon la revendication 1, caractérisé en ce que l'étape d) comprend un refroidissement à une température inférieure à 10°C.

7. Une émulsion pouvant être obtenue en utilisant le procédé selon l'une ou plus des revendications 1-6.

8. Un produit comestible contenant l'émulsion selon la revendication 7.
